# EUROPEAN PATENT SPECIFICATION

(11) **EP 4 448 879 B1**
(45) Date of publication and mention of the grant of the patent: **05.11.2025**
(21) Application number: 22822952.2
(22) Date of filing: 28.11.2022
(51) Int. Cl.: E02F 3/18, A01B 33/00, E02F 3/20, E02F 3/24, E02F 3/36, E02F 5/30, E02F 9/28

(54) **ATTACHMENT FOR AN EXCAVATOR**
ANBAUGERÄT FÜR EINEN BAGGER
ACCESSOIRE POUR UNE EXCAVATRICE

(30) Priority: 16.12.2021 GB 202118237
(43) Date of publication of application: 23.10.2024
(73) Proprietor: Galloway Steel Fabrications Limited, Downpatrick, Down BT30 6PF (GB)
(72) Inventor: GALLOWAY, Mark, Downpatrick, Down BT30 6PF (GB)
(74) Representative: FRKelly
(86) International application number: PCT/EP2022/083516
(87) International publication number: WO 2023/110378

(56) References cited:
- EP-A1- 0 964 221
- EP-A2- 1 062 390
- DE-U1- 202018 003 633
- US-A1- 2016 138 241
- US-A1- 2019 090 406

## Description

### FIELD OF THE INVENTION

This invention relates to an attachment for an excavator and in particular to a ground working attachment for mounting on a dipper arm of an excavator to allow the excavator to be used for removing stones, debris and other unwanted material from the surface of the soil while conditioning and levelling the soil.

### BACKGROUND OF THE INVENTION

When landscaping and during other groundworks it is often necessary to remove stones, debris and other unwanted material from the surface of the soil, for example in preparation for sowing seeds or laying turf.

This is typically achieved by using a large fixed rake having curved tines mounted on or trailed behind a tractor, mini-loader or tracked vehicle. However, it can be difficult to operate such known vehicle mounted rakes on more difficult ground condition e.g. steep ground, soft ground, uneven ground, and ground with difficult or narrow access points. Furthermore, such known fixed stone rakes can typically only operate in one direction due to the curvature of the tines.

It is also known to provide powered stone rakes, wherein rake teeth are mounted on the periphery of a rotating drum to penetrate the soil and rake out stones and other debris as the drum is rotated. However, such powered stone rakes normally need to be mounted on a tractor or tracked vehicle, leading to the same accessibility problems as fixed rakes. Furthermore, it can be difficult to control the depth to which the teeth cut into the soil.

As well as removing stones and debris it is also required to condition and level the ground for subsequent operations. This typically requires the use of subsequent soil working implements, such as tillers and cultivators.

While excavators having buckets attached to a quick hitch or quick coupler on a distal end of a dipper arm are commonly used for digging and excavating the ground during a landscaping operation, such machines are not suited to the removal of stones, debris and other unwanted material from the surface of the soil. It is therefore an object of the present invention to provide an attachment to allow an excavator to be used for removing stones, debris and other unwanted material from the surface of the soil while conditioning and levelling the soil. Examples of known rotary digging or excavating implements for attachment to an excavator are shown in EP0964221 A1, EP1062390A2, US2019/090406A1, DE202018003633U1 and US2016/138241A1.

### SUMMARY OF THE INVENTION

According to the present invention there is provided an attachment adapted to be coupled to a quick coupler on a dipper arm of an excavator as claimed in claim 1.

The ground engaging teeth may be mounted on said rotor in one or more spirally extending rows.

The ground engaging teeth may include replaceable wear tips.

The coupling may be provided on an upper wall of said cover plate substantially midway between said side plates. In a preferred embodiment the coupling comprises a pair of spaced apart first coupling bars adapted to be engaged by respective latching hooks of an excavator quick coupler, said first coupling bars extending substantially perpendicular to said side plates such that the attachment can be coupled to an arm of an excavator via said first coupling bars with the rotor extending transverse to the direction of movement of the arm. The coupling may comprise a pair of spaced apart second coupling bars adapted to be engaged by respective latching hooks of a quick coupler of an excavator, said second coupling bars extending between and substantially perpendicular to said first coupling bars and parallel to said side plates such that the attachment can be coupled to an arm of an excavator via said second coupling bars with the rotor substantially aligned with the direction of movement of the arm.

The motor, which may comprise a hydraulic or an electric motor, may be mounted on one of said side plates, the motor being drivingly coupled to the rotor via a drive chain or drive belt.

The distal ends of the skids may be shaped to define pointed teeth.

A ground engaging roller may be mounted between the side plates to extend parallel to the rotor on an opposite side of the rotor to said skids. Preferably the ground engaging roller is mounted to be adjustable in height with respect to said rotor. In one embodiment the ground engaging roller may be mounted between roller support arms, each roller support arm being pivotally coupled to a respective side plate about a common pivot axis extending parallel to the rotor, an adjustable linkage means extending between the respective side plate and the respective support arm to allow the height of the ground engaging roller to be adjusted with respect to the rotor by adjusting the angle of each support arm with respect to the respective side plate. Each adjustable linkage may comprise a threaded rod.

The ends of the ground engaging roller may be mounted in bearings provided on the roller support arms.

The ground engaging roller may be provided with radially extending teeth extending from the outer surface thereof to allow the roller to assist in conditioning soil.

### BRIEF DESCRIPTION OF THE DRAWINGS

A ground working attachment for an excavator in accordance with an embodiment of the present invention will now be described, by way of example only, with reference to the accompanying drawings, in which:
Figure 1 is a perspective view of an attachment in accordance with an embodiment of the present invention coupled to a quick coupler at a distal end of a dipper arm of an excavator;

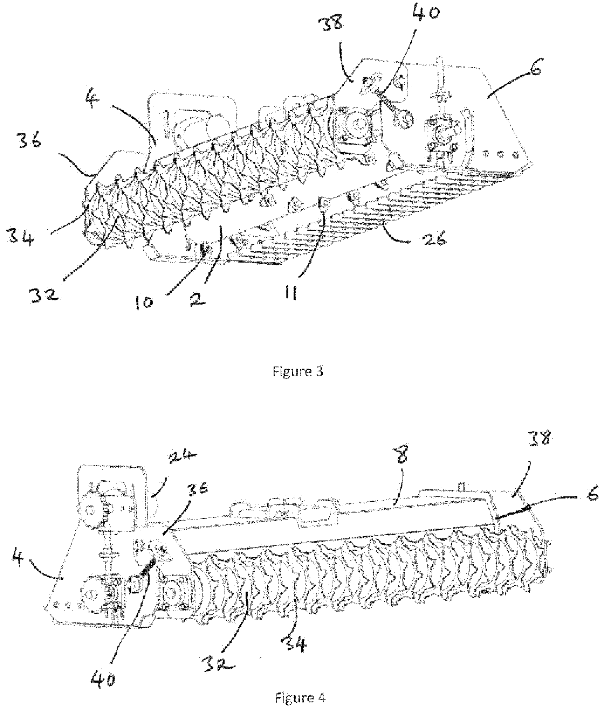

Figures 2 to 4 are different perspective views of the attachment of Figure 1;
Figure 5 is an overhead view of the attachment of Figure 1;
Figure 6 is a view from below of the attachment of Figure 1;
Figure 7 is a side view of the attachment of Figure 1; and
Figure 8 is a side view of the attachment of Figure 1 showing hidden detail.

### DETAILED DESCRIPTION OF THE DRAWINGS

As illustrated in the drawings, a ground working attachment 1 for attachment to an excavator or back hoe for use in removing stones, debris and other unwanted material from the surface of the soil while conditioning and levelling the soil and in accordance with an embodiment of the present invention comprises a rotor 2 rotatably mounted between a pair of side plates 4,6 joined by a cover plate 8, said cover plate 8 extending over the top of the rotor 2, the rotor 2 having a plurality of ground engaging teeth 10 mounted thereon. In the embodiment shown the ground engaging teeth 10 are arranged on the rotor in one or more spirally arranged rows, although other patterns of teeth are envisaged.

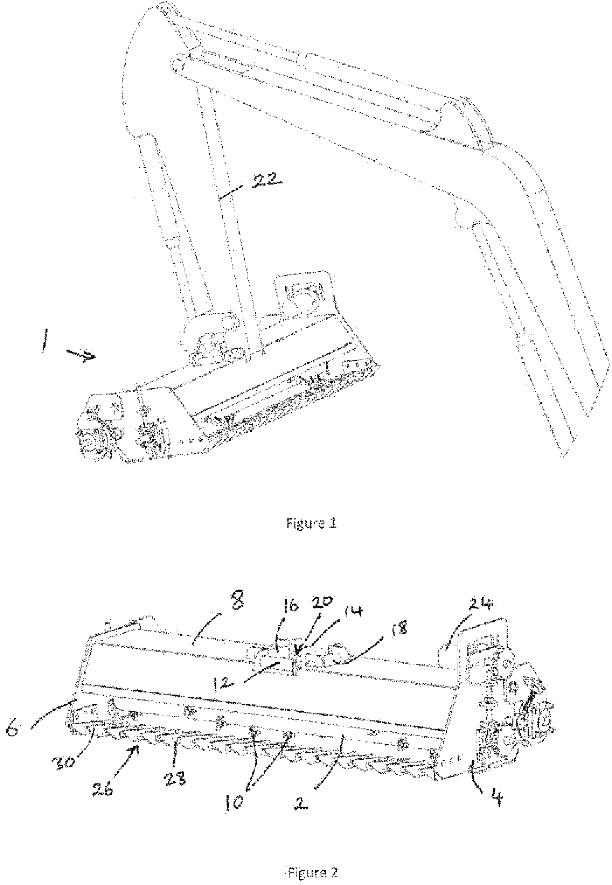

First and second pairs of suitably spaced coupling bars 12,14,16,18 are provided on respective opposing sides of an opening or recess 20 on the upper wall of the cover plate 8, said first and second pairs of coupling bars being arranged perpendicular to one another with the first pair 12,14 arranged perpendicular to the side plates 4,6 and the second pair 16,18 arranged parallel to the side plates 4,6, whereby the latching hooks of an excavator quick coupler (not shown) provided at a distal end of a dipper arm 22 of a back hoe may be engaged with selected first or second pairs of coupling bars 12,14,16,18 to couple the ground working attachment to the dipper arm 22 of an excavator in a desired orientation, with the rotor 2 extending transverse to the direction of movement of the dipper arm 22 when the quick coupler is attached to the first pair of coupling bars 12,14 (as shown in Figure 1) or with the rotor 2 aligned with the direction of movement of the dipper arm 22 when the quick coupler is attached to the second pair of coupling bars 16,18.

A drive motor 24 is mounted on one of the side plates for driving the rotor via a suitable chain and sprocket arrangement or via a belt and pulleys. The motor 24 is preferably a hydraulic motor driven via a supply of hydraulic fluid from the excavator. Alternatively, the motor may comprise an electric motor. The motor 24 may be reversible to drive the rotor in either direction.

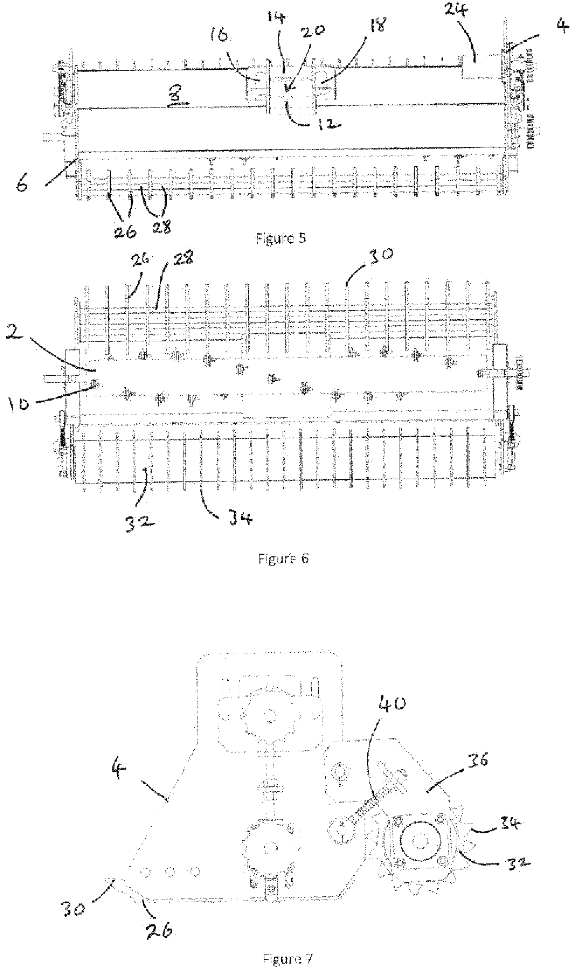

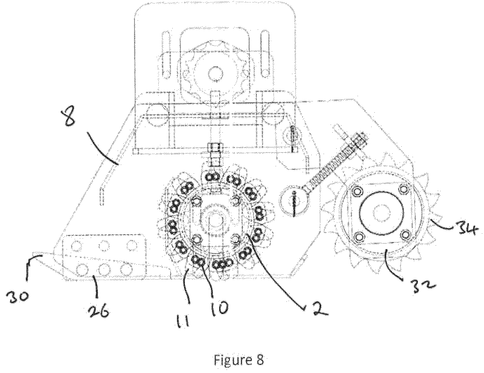

As best illustrated in Figure 6 and 8, each tooth 10 of the rotor 2 may include a replaceable wear tip 11, which may be bolted to the remainder of the respective tooth to allow replacement when worn.

In a preferred embodiment a row of mutually spaced part skids 26 are mounted between the side plates 4,6 extending parallel to one another and to the side plates 4,6, wherein said skids 26 are adapted to engage the ground to one side of the rotor 2 to facilitate control of the depth to which the teeth of the rotor extend into the ground, in use. The skids 26 comprise elongate tines arranged parallel to one another and mounted on transversely extending support bars 28 extending between said side plates 4,6.

A distal end 30 of each skid 26 preferably terminates in a point extending beyond the side plates 4,6 to enable the distal ends 30 of the skids 26 to be used as a rake when the attachment is held in an orientation with the distal ends of the skids facing downwardly, allowing material loosened by the teeth 10 of the rotor 2 to be cleared from the ground by manipulating the attachment such that the skids 26 point downwardly and then drawings the skids across the ground using the dipper arm of the excavator.

The skids may be detachable from the attachment if not required.

A ground engaging roller 32, having axially spaced groups of radially extending teeth 34, may be mounted between the side plates 4,6 to extend parallel to the rotor 2 on an opposite side of the rotor to the skids 26. The ground engaging roller 32 is preferably mounted to be adjustable in height with respect to said rotor 2, thereby providing a height control function for the rotor 2.

In the embodiment shown, the ground engaging roller 32 is mounted between a pair of roller support arms 36,38, each roller support arm 36,38 being pivotally coupled to a respective side plate 2,4 about a common pivot axis extending parallel to the axis of the rotor 2. An adjustable linkage, preferably in the form of a threaded rod 40, extends between each side plate 4,6 and the respective support arm 36,38 mounted thereon to allow the height of the ground engaging roller 32 to be adjusted with respect to the rotor 2 by adjusting the angle of each support arm 36,38 with respect to the respective side plate 4,6. Each end of the ground engaging roller 32 is mounted in a respective support bearing provided on the respective roller support arm 36,38. As well as controlling the depth of penetration of the teeth 10 of the rotor 2 into the soil, the teeth 34 of the ground engaging roller 32 may also service to condition the soil.

The attachment in accordance with the above described embodiment of the present invention permits conventional excavators, commonly available during landscaping and other works, to be utilised for removing stones, debris and other unwanted material from the surface of the soil while conditioning and levelling the soil. The attachment can be used for soil conditioning, such as tilling, as well as having a grading and levelling functionality. The teeth of the rotor penetrate the soil to rake out debris, stones and rocks and condition the soil for subsequent sowing operations. The teeth of the rotor are preferably adapted to be easily replaceable when worn.

The rotor and/or the ground engaging roller may be interchanged with ones having different teeth shape/arrangements to provide different ground finishes.

Because the attachment is adapted to be mounted on an excavator or back hoe it can be used in difficult locations, such as steep ground, soft ground, uneven ground, and ground with small/difficult access points.

Because the attachment is adapted to be coupled to an excavator or a back hoe via a conventional quick hitch/coupler it can be quickly attached and detached as needed.

The invention is not limited to the embodiment described herein but can be amended or modified without departing from the scope of the present invention as defined by the following claims.

## Claims

1. An attachment (1) adapted to be coupled to a quick coupler on a dipper arm (22) of an excavator, said attachment comprising a rotor (2) having a plurality of ground engaging teeth (10) mounted thereon and a motor (24) for rotatably driving said rotor, wherein said rotor (2) is rotatably mounted between a pair of side plates (4,6) to extend substantially parallel to the ground, in use, a cover plate (8) extending between said side plates (4,6) to extend over at least an upper portion of said rotor (2), a coupling being provided on said cover plate (8) adapted to engage a quick coupler provided on a distal end of a dipper arm (22) of an excavator, **characterised in that** a row of mutually spaced apart skids (26) are mounted between the side plates (4,6) extending parallel to the side plates, wherein said skids (26) are adapted to engage the ground to facilitate control of the depth to which the teeth (10) of the rotor (2) extend into the ground, in use, said skids (26) comprising elongate tines or plates arranged parallel to one another and mounted on transversely extending support bars (28) extending between said side plates (4,6), wherein a distal end (30) of each skid (26) extends beyond the side plates (4,6) to enable the distal ends (30) of the skids (26) to be used as a rake when the attachment (1) is held in an orientation with the distal ends of the skids (26) facing downwardly.

2. An attachment as claimed in claim 1, wherein said ground engaging teeth (10) are mounted on said rotor (2) in one or more spirally extending rows.

3. An attachment as claimed in claim 1 or claim 2, wherein said ground engaging teeth (10) include replaceable wear tips (11).

4. An attachment as claimed in any preceding claim, wherein said coupling is provided on an upper wall of said cover plate (8) substantially midway between said side plates (4,6).

5. An attachment as claimed in claim 4, wherein said coupling comprises a pair of spaced apart first coupling bars (12,14) adapted to be engaged by respective latching hooks of an excavator quick coupler, said first coupling bars (12,14) extending substantially perpendicular to said side plates (4,6) such that the attachment (1) can be coupled to a dipper arm of an excavator via said first coupling bars (12,14) with the rotor (2) extending transverse to the direction of movement of the dipper arm (22).

6. An attachment as claimed in claim 5, wherein said coupling comprises a pair of spaced apart second coupling bars (16,18) adapted to be engaged by respective latching hooks of a quick coupler of an excavator, said second coupling bars (16,18) extending between and substantially perpendicular to said first coupling bars (12,14) and parallel to said side plates (4,6) such that the attachment (1) can be coupled to a dipper arm (22) of an excavator via said second coupling bars (16,18) with the rotor (2) substantially aligned with the direction of movement of the dipper arm (22).

7. An attachment as claimed in any preceding claim, wherein said motor (24) is mounted on one of said side plates (4,6), the motor (24) being drivingly coupled to the rotor (2) via a drive chain or drive belt.

8. An attachment as claimed in any preceding claim, wherein said distal ends (30) of said skids (26) are shaped to define pointed teeth.

9. An attachment as claimed in any preceding claim, wherein a ground engaging roller (32) is mounted between the side plates (4,6) to extend parallel to the rotor (2) on an opposite side of the rotor to said skids (26).

10. An attachment as claimed in claim 9, wherein said ground engaging roller (32) is mounted to be adjustable in height with respect to said rotor (2).

11. An attachment as claimed in claim 10, wherein said ground engaging roller (32) is mounted between roller support arms (36,38), each roller support arm (36,38) being pivotally coupled to a respective side plate (4,6) about a common pivot axis extending parallel to the rotor (2), an adjustable linkage means (40) extending between the respective side plate (4,6) and the respective support arm (36,38) to allow the height of the ground engaging roller (32) to be adjusted with respect to the rotor (2) by adjusting the angle of each support arm (36,38) with respect to the respective side plate (4,6).

12. An attachment as claimed in claim 11, wherein the ends of said ground engaging roller (32) are mounted in bearings provided on the roller support arms.

13. An attachment as claimed in any of claims 9 to 12 wherein said ground engaging roller (32) is provided with radially extending teeth (34) extending from the outer surface thereof.

14. An attachment as claimed in any preceding claim, wherein said motor (24) comprises a hydraulic motor.

## Patentansprüche

1. Anbaugerät (1), das angepasst ist, um an eine Schnellkupplung an einem Löffelstiel (22) eines Baggers gekoppelt zu werden, wobei das Anbaugerät einen Rotor (2) mit einer Vielzahl von daran angebrachten Bodeneingriffszähnen (10) und einen Motor (24) zum drehbaren Antreiben des Rotors umfasst, wobei der Rotor (2) drehbar zwischen einem Paar von Seitenplatten (4, 6) drehbar gelagert ist, um sich bei Verwendung im Wesentlichen parallel zu dem Boden zu erstrecken, wobei sich eine Abdeckplatte (8) zwischen den Seitenplatten (4, 6) erstreckt, um sich mindestens über einen oberen Abschnitt des Rotors (2) zu erstrecken, eine Kupplung an der Abdeckplatte (8) bereitgestellt ist, die angepasst ist, um in eine Schnellkupplung einzugreifen, die an einem distalen Ende eines Löffelstiels (22) eines Baggers bereitgestellt ist, **dadurch gekennzeichnet, dass** eine Reihe von voneinander beabstandeten Kufen (26) zwischen den Seitenplatten (4, 6) angebracht ist, die sich parallel zu den Seitenplatten erstrecken, wobei die Kufen (26) ausgelegt sind, um in den Boden einzugreifen, um die Steuerung der Tiefe zu erleichtern, bis zu der sich die Zähne (10) des Rotors (2) bei Verwendung in den Boden erstrecken, wobei die Kufen (26) längliche Zinken oder Platten umfassen, die parallel zueinander angeordnet und an sich quer erstreckenden Stützstangen (28) angebracht sind, die sich zwischen den Seitenplatten (4, 6) erstrecken, wobei sich ein distales Ende (30) jeder Kufe (26) über die Seitenplatten (4, 6) hinaus erstreckt, um zu ermöglichen, dass die distalen Enden (30) der Kufen (26) als eine Harke verwendet werden können, wenn das Anbaugerät (1) in einer Ausrichtung gehalten wird, bei der die distalen Enden der Kufen (26) nach unten weisen.

2. Anbaugerät nach Anspruch 1, wobei die Bodeneingriffszähne (10) in einer oder mehreren sich spiralförmig erstreckenden Reihen auf dem Rotor (2) angebracht sind.

3. Anbaugerät nach Anspruch 1 oder Anspruch 2, wobei die Bodeneingriffszähne (10) austauschbare Verschleißspitzen (11) aufweisen.

4. Anbaugerät nach einem der vorhergehenden Ansprüche, wobei die Kupplung an einer oberen Wand der Abdeckplatte (8) im Wesentlichen in der Mitte zwischen den Seitenplatten (4, 6) bereitgestellt ist.

5. Anbaugerät nach Anspruch 4, wobei die Kupplung ein Paar voneinander beabstandete erste Kupplungsstangen (12, 14) umfasst, die angepasst sind, um mit entsprechenden Verriegelungshaken eines Baggerschnellwechslers in Eingriff gebracht zu werden, sich die ersten Kupplungsstangen (12, 14) im Wesentlichen derart senkrecht zu den Seitenplatten (4, 6) erstrecken, dass das Anbaugerät (1) über die ersten Kupplungsstangen (12, 14) an einen Löffelstiel eines Baggers gekoppelt werden kann, wobei sich der Rotor (2) quer zu der Bewegungsrichtung des Löffelstiels (22) erstreckt.

6. Anbaugerät nach Anspruch 5, wobei die Kupplung ein Paar voneinander beabstandete zweite Kupplungsstangen (16, 18) umfasst, die angepasst sind, um mit entsprechenden Verriegelungshaken eines Baggerschnellwechslers in Eingriff gebracht zu werden, sich die zweiten Kupplungsstangen (16, 18) im Wesentlichen zwischen und derart senkrecht zu den ersten Kupplungsstangen (12, 14) und parallel zu den Seitenplatten (4, 6) erstrecken, dass das Anbaugerät (1) über die zweiten Kupplungsstangen (16, 18) an einen Löffelstiel (22) eines Baggers gekoppelt werden kann, wobei der Rotor (2) im Wesentlichen mit der Bewegungsrichtung des Löffelstiels (22) ausgerichtet ist.

7. Anbaugerät nach einem der vorhergehenden Ansprüche, wobei der Motor (24) auf einer der Seitenplatten (4, 6) angebracht ist, wobei der Motor (24) über eine Antriebskette oder einen Antriebsriemen mit dem Rotor (2) antriebsmäßig gekoppelt ist.

8. Anbaugerät nach einem der vorhergehenden Ansprüche, wobei die distalen Enden (30) der Kufen (26) geformt sind, um spitze Zähne zu bilden.

9. Anbaugerät nach einem der vorhergehenden Ansprüche, wobei eine Bodeneingriffsrolle (32) zwischen den Seitenplatten (4, 6) angebracht ist, um sich parallel zu dem Rotor (2) auf einer den Kufen (26) gegenüberliegenden Seite des Rotors zu erstrecken.

10. Anbaugerät nach Anspruch 9, wobei die Bodeneingriffsrolle (32) hinsichtlich des Rotors (2) höhenverstellbar angebracht ist.

11. Anbaugerät nach Anspruch 10, wobei die Bodeneingriffsrolle (32) zwischen Rollenstützarmen (36, 38) angebracht ist, wobei jeder Rollenstützarm (36, 38) schwenkbar mit einer jeweiligen Seitenplatte (4, 6) über eine gemeinsame Schwenkachse verbunden ist, die sich parallel zu dem Rotor (2) erstreckt, sich ein verstellbares Verbindungsmittel (40) zwischen der jeweiligen Seitenplatte (4, 6) und dem jeweiligen Stützarm (36, 38) erstreckt, um zu ermöglichen, dass die Höhe der Bodeneingriffsrolle (32) hinsichtlich des Rotors (2) durch Einstellen des Winkels jedes Stützarms (36, 38) hinsichtlich der jeweiligen Seitenplatte (4, 6) eingestellt werden kann.

12. Anbaugerät nach Anspruch 11, wobei die Enden der Bodeneingriffsrolle (32) in Lagern angebracht sind, die an den Rollenstützarmen bereitgestellt sind.

13. Anbaugerät nach einem der Ansprüche 9 bis 12, wobei die Bodeneingriffsrolle (32) mit sich radial erstreckenden Zähnen (34) bereitgestellt ist, die sich von ihrer Außenoberfläche aus erstrecken.

14. Anbaugerät nach einem der vorhergehenden Ansprüche, wobei der Motor (24) einen Hydraulikmotor umfasst.

## Revendications

1. Accessoire (1) conçu pour être couplé à un coupleur rapide sur un bras de balancier (22) d'une excavatrice, ledit accessoire comprenant un rotor (2), sur lequel sont montées plusieurs dents en prise avec le sol (10), et un moteur (24) pour entraîner en rotation ledit rotor, dans lequel ledit rotor (2) est monté rotatif entre une paire de plaques latérales (4, 6) de manière à s'étendre sensiblement parallèlement au sol, en utilisation, une plaque de recouvrement (8) s'étendant entre lesdites plaques latérales (4, 6) de manière à s'étendre au-dessus au moins d'une partie supérieure dudit rotor (2), un couplage étant prévu sur ladite plaque de recouvrement (8) conçue pour venir en prise avec un coupleur rapide prévu à une extrémité distale d'un bras de balancier (22) d'une excavatrice, **caractérisé en ce qu'**une rangée de patins espacés les uns des autres (26) est montée entre les plaques latérales (4, 6) en s'étendant parallèlement aux plaques latérales, dans lequel lesdits patins (26) sont conçus pour venir en prise avec le sol afin de faciliter le contrôle de la profondeur à laquelle les dents (10) du rotor (2) s'étendent dans le sol, en utilisation, lesdits patins (26) comprenant des fourches ou des plaques allongées disposées parallèlement les unes aux autres et montées sur des barres de support s'étendant transversalement (28) s'étendant entre lesdites plaques latérales (4, 6), dans lequel une extrémité distale (30) de chaque patin (26) s'étend au-delà des plaques latérales (4, 6) pour permettre aux extrémités distales (30) des patins (26) d'être utilisées comme un râteau lorsque l'accessoire (1) est maintenu dans une orientation avec les extrémités distales des patins (26) tournées vers le bas.

2. Accessoire selon la revendication 1, dans lequel lesdites dents en prise avec le sol (10) sont montées sur ledit rotor (2) en une ou plusieurs rangées s'étendant en spirale.

3. Accessoire selon la revendication 1 ou la revendication 2, dans lequel lesdites dents en prise avec le sol (10) comprennent des pointes d'usure remplaçables (11).

4. Accessoire selon une quelconque revendication précédente, dans lequel ledit couplage est prévu sur une paroi supérieure de ladite plaque de recouvrement (8) sensiblement à mi-chemin entre lesdites plaques latérales (4, 6).

5. Accessoire selon la revendication 4, dans lequel ledit couplage comprend une paire de premières barres de couplage espacées (12, 14) conçues pour venir en prise avec des crochets de verrouillage respectifs d'un coupleur rapide d'excavatrice, lesdites premières barres de couplage (12, 14) s'étendant sensiblement perpendiculairement auxdites plaques latérales (4, 6) de telle sorte que l'accessoire (1) peut être couplé à un bras de balancier d'une excavatrice par l'intermédiaire desdites premières barres de couplage (12, 14) avec le rotor (2) s'étendant transversalement à la direction de mouvement du bras de balancier (22).

6. Accessoire selon la revendication 5, dans lequel ledit couplage comprend une paire de secondes barres de couplage espacées (16, 18) conçues pour venir en prise avec des crochets de verrouillage respectifs d'un coupleur rapide d'une excavatrice, lesdites secondes barres de couplage (16, 18) s'étendant entre et sensiblement perpendiculairement auxdites premières barres de couplage (12, 14) et parallèlement auxdites plaques latérales (4, 6) de telle sorte que l'accessoire (1) peut être couplé à un bras de balancier (22) d'une excavatrice par l'intermédiaire desdites secondes barres de couplage (16, 18) avec le rotor (2) s'étendant de manière sensiblement alignée avec la direction de mouvement du bras de balancier (22).

7. Accessoire selon une quelconque revendication précédente, dans lequel ledit moteur (24) est monté sur l'une desdites plaques latérales (4, 6), le moteur (24) étant couplé par entraînement au rotor (2) par l'intermédiaire d'une chaîne d'entraînement ou d'une courroie d'entraînement.

8. Accessoire selon une quelconque revendication précédente, dans lequel lesdites extrémités distales (30) desdits patins (26) sont formées pour définir des dents pointues.

9. Accessoire selon une quelconque revendication précédente, dans lequel un rouleau en prise avec le sol (32) est monté entre les plaques latérales (4, 6) pour s'étendre parallèlement au rotor (2) sur un côté du rotor opposé auxdits patins (26).

10. Accessoire selon la revendication 9, dans lequel ledit rouleau en prise avec le sol (32) est monté de manière à être réglable en hauteur par rapport audit rotor (2).

11. Accessoire selon la revendication 10, dans lequel ledit rouleau en prise avec le sol (32) est monté entre des bras de support de rouleau (36, 38), chaque bras de support de rouleau (36, 38) étant couplé de manière pivotante à une plaque latérale (4, 6) respective autour d'un axe de pivot commun s'étendant parallèlement au rotor (2), un moyen de liaison réglable (40) s'étendant entre la plaque latérale (4, 6) respective et le bras de support (36, 38) respectif pour permettre de régler la hauteur du rouleau en prise avec le sol (32) par rapport au rotor (2) en réglant l'angle de chaque bras de support (36, 38) par rapport à la plaque latérale (4, 6) respective.

12. Accessoire selon la revendication 11, dans lequel les extrémités dudit rouleau en prise avec le sol (32) sont montées dans des paliers prévus sur les bras de support de rouleau.

13. Accessoire selon l'une quelconque des revendications 9 à 12, dans lequel ledit rouleau en prise avec le sol (32) est pourvu de dents s'étendant radialement (34) s'étendant à partir de sa surface extérieure.

14. Accessoire selon une quelconque revendication précédente, dans lequel ledit moteur (24) comprend un moteur hydraulique.
